# FASCICULE DE BREVET EUROPEEN

(11) **EP 3 291 974 B1**
(45) Date de publication et mention de la délivrance du brevet: **13.03.2024**
(21) Numéro de dépôt: 16727748.2
(22) Date de dépôt: 02.05.2016
(51) Int. Cl.: B29C 70/46, B29C 70/54, H05B 6/62, D06M 23/08, B60R 13/02, B32B 5/26

(54) **PANNEAU POUR L'HABILLAGE ET/OU L'INSONORISATION D'UNE PAROI D'UN VEHICULE ET PROCEDE DE REALISATION ASSOCIE**
PANEEL ZUM ABDECKEN UND/ODER ZUR SCHALLDÄMMUNG EINER WAND EINES FAHRZEUGS UND ZUGEHÖRIGES VERFAHREN ZUR HERSTELLUNG
PANEL FOR COVERING AND/OR SOUNDPROOFING A WALL OF A VEHICLE AND ASSOCIATED METHOD OF MANUFACTURE

(30) Priorité: 04.05.2015 FR 1553979
(43) Date de publication de la demande: 14.03.2018
(73) Titulaire: Fibroline, 69760 Limonest (FR); Howa Tramico, 27800 Brionne (FR)
(72) Inventeur: HUMBERT, Clément, 42100 Saint Etienne (FR); BONIN, Vincent, 69210 Saint Pierre la Palud (FR); MOUGNARD, Laurent, 61300 Saint Sulpice Sur Risle (FR)
(74) Mandataire: Cabinet Laurent & Charras
(86) Numéro de dépôt international: PCT/FR2016/051033
(87) Numéro de publication internationale: WO 2016/177960

(56) Documents cités:
- EP-A1- 1 526 214
- EP-A1- 1 875 822
- WO-A1-2005/037897
- US-A- 5 976 295
- Anonymous: "Fibroline Impregnation technology - technology for nonwovens textiles", , 19 décembre 2014 (2014-12-19), XP055298663, Extrait de l'Internet: URL:http://web.archive.org/web/20141219140 258/http://www.fibroline.com/#!technologie s/c1diw [extrait le 2016-08-30]

## Description

### DOMAINE TECHNIQUE

La présente invention concerne un procédé de fabrication d'un panneau pour l'habillage et/ou l'insonorisation d'une paroi d'un véhicule, par exemple un véhicule automobile. Ce panneau est particulièrement adapté pour les panneaux de garniture d'un habitacle d'un véhicule automobile tels que les panneaux disposés sous le pavillon ou sur les parois latérales.

### ART ANTERIEUR

Les panneaux de garniture d'un habitacle de véhicules automobiles doivent répondre à un grand nombre de contraintes. Ces panneaux doivent être légers pour limiter le poids du véhicule, ils doivent être thermoformables pour épouser les courbes intérieures du véhicule, ils doivent absorber efficacement les ondes acoustiques et limiter les perturbations sonores à l'intérieur du véhicule, ils doivent être conformes aux obligations de sécurité concernant la résistance au feu, et ils doivent être compacts pour éviter leurs déformations dans le temps. Il existe très peu de procédés permettant de fabriquer un tel matériau.

La demande de brevet N° FR 2 503 721 décrit un procédé permettant de fabriquer un panneau répondant à ces contraintes. Ce panneau est constitué d'une couche centrale et deux couches de renfort disposées de part et d'autre de la couche centrale. La couche centrale est apte à répondre aux contraintes de légèreté, de souplesse et d'absorption acoustique alors que les deux couches de renfort sont aptes à répondre aux contraintes de tenue mécanique. Pour ce faire, la couche centrale est réalisée à partir d'une mousse imprégnée d'une résine sous forme liquide puis réticulée. La résine utilisée est du MDI (pour 4-4' diphénylméthane diisocyanate). La face supérieure est recouverte d'une couche de protection destinée à venir en contact avec un élément du véhicule et la face inférieure est recouverte d'une couche d'aspect pour améliorer l'esthétisme du panneau pour l'utilisateur du véhicule. L'étape de rigidification de la résine contenue dans la mousse intervient lorsque toutes les couches sont liées entre elles pendant une étape de thermoformage, de sorte que le panneau prenne la forme désirée.

Le document EP 1875822 A1 décrit un procédé de fabrication d'un renfort capable de se thermolier à un support, pour une utilisation notamment dans l'industrie de l'automobile.

Cependant, la tenue mécanique de la mousse réticulée n'est pas suffisante ce qui impose l'utilisation de couches de renfort particulièrement rigides telles que des couches en fibres de verre. Ces couches de renfort en fibres de verre posent des problèmes de recyclage du panneau. En effet, il n'est pas rare qu'une partie du panneau soit découpée, par exemple pour intégrer une ouverture d'un toit en verre sur le véhicule. Dans ce cas, la partie du panneau correspondant au toit en verre est découpée et mise au rebut. La présence de résine et de verre dans ces chutes limite les possibilités de recyclage.

En outre, le procédé de fabrication du panneau pose un certain nombre de contraintes dues au fait que la résine est amenée sous forme liquide sur la mousse par des rouleaux lécheurs de sorte à imprégner la mousse qui est ensuite mise au contact d'un catalyseur. La réaction du catalyseur avec la résine provoque le dégagement de composés volatiles (COV) dans l'air ce qui peut dégager une odeur incommodante pour le personnel en charge de la réalisation du panneau. En outre, le panneau doit être mis en forme avant que la résine ne réticule ce qui impose un rythme constant sur la chaîne de fabrication. Par exemple, si la chaîne de fabrication est stoppée, la rigidification des mousses imprégnées en résine commence avant d'entrer dans un moule de thermoformage et les pièces inachevées doivent être mises au rebut.

La méthode d'imprégnation des mousses par la résine doit également être minutieusement calibrée pour chaque série de pièces car la quantité de résine dans la mousse est un élément essentiel. Si la mousse contient trop de résine, la résine arrive à traverser la couche d'aspect et la résine sera visible au niveau des angles ce qui dégrade la couche d'aspect. Si la mousse contient trop peu de résine, le panneau sera trop souple et n'aura pas suffisamment de tenue mécanique. La mise au point de la quantité de résine pour chaque série de pièces est un processus itératif complexe qui nécessite une grande expérience.

Il existe donc un besoin d'un nouveau panneau pour un habitacle d'un véhicule automobile répondant aux contraintes précitées mais dont le processus de fabrication est amélioré.

### EXPOSE DE L'INVENTION

La présente invention concerne un procédé de fabrication d'un panneau pour l'habillage et/ou l'insonorisation d'une paroi d'un véhicule, ledit panneau comportant :
- une couche centrale réalisée par imprégnation de résine thermoformable dans un matériau souple et poreux, puis rigidification de la résine thermoformable, et
- deux couches de renfort disposées de part et d'autre de la couche centrale,
- l'imprégnation du matériau souple et poreux par la résine thermoformable étant effectuée en profondeur dans le matériau souple et poreux en soumettant une poudre de ladite résine thermoformable à un champ électrique alternatif,
- les deux couches de renfort étant réalisées à partir d'un matériau souple ou semi rigide.

L'invention permet ainsi d'obtenir un panneau pour un habitacle d'un véhicule automobile à la fois léger, thermoformable, absorbant les ondes acoustiques, conforme aux obligations de sécurité et compact. Le matériau souple et poreux qui constitue l'âme du panneau peut très avantageusement être une mousse constituée au moins partiellement de cellules ouvertes.

L'imprégnation de la résine en profondeur au coeur des cellules de la mousse et l'utilisation de couches de renfort réalisées à partir d'un matériau souple ou semi rigide permet d'améliorer la répartition de la résine et la cohésion entre les couches de renfort et la couche centrale. Ainsi, des couches de renfort en fibres de verre ne sont plus nécessaires et le panneau peut désormais être plus facilement recyclable.

Les problèmes d'odeur et de mise au point du processus de fabrication par voie humide sont également supprimés par l'utilisation d'une voie sèche dans laquelle la résine thermoformable est imprégnée dans le matériau souple et poreux sans utiliser de liquide. La rigidification de la résine thermoformable peut être effectuée bien après la pénétration de la résine thermoformable dans le matériau ce qui limite les contraintes de temps dues au séchage de la résine thermoformable liquide dans le matériau souple et poreux.

Selon l'invention, au moins une couche de renfort est réalisée par imprégnation d'une poudre de résine thermoformable dans un second matériau poreux, l'imprégnation de la couche de renfort par la poudre de résine thermoformable étant effectuée en profondeur dans le second matériau poreux par soumission à un champ électrique alternatif. La rigidification des résines imprégnées par voie sèche pouvant être effectuée ultérieurement, les couches de renfort peuvent être réalisées par un processus similaire à la couche centrale sur une chaîne de fabrication annexe. De préférence, le second matériau poreux est un non tissé à base de fibres synthétiques. En variante, le second matériau poreux est une étoffe en fibre naturelle ou autre.

Selon un mode de réalisation, le panneau comporte une couche d'aspect fixée sur une face d'une couche de renfort par une couche thermocollante. Avantageusement, le panneau comporte également une couche de protection fixée sur une face d'une couche de renfort par une couche thermocollante.

Le procédé de fabrication selon l'invention comporte les étapes consistant à :
- déposer une résine thermoformable sous forme de poudre sur le matériau souple et poreux,
- imprégner la résine thermoformable en profondeur dans le matériau souple et poreux par l'application d'un champ électrique alternatif traversant le matériau souple et poreux, et
- fixer par ramollissement la résine thermoformable dans le matériau souple et poreux.

Selon un premier mode de réalisation du procédé de fabrication, le procédé comporte les étapes consistant à :
- assembler une couche de renfort inférieure sur une face inférieure du matériau souple et poreux avant l'étape consistant à déposer une résine thermoformable, et
- assembler une couche de renfort supérieure sur une face supérieure du matériau souple et poreux avant l'étape consistant à imprégner la résine thermoformable,
- les couches de renfort étant réalisées à partir d'un second matériau poreux,
- l'étape consistant à imprégner la résine thermoformable étant apte à imprégner les seconds matériaux poreux des couches de renfort.

Ce mode de réalisation permet d'imprégner simultanément la couche centrale et les couches de renfort.

Selon l'invention, le procédé comporte les étapes consistant à :
- assembler une couche de renfort inférieure sur une face inférieure du matériau souple et poreux après l'étape consistant à imprégner la résine thermoformable, et
- assembler une couche de renfort supérieure sur une face supérieure du matériau souple et poreux après l'étape consistant à imprégner la résine thermoformable,
- les couches de renfort étant réalisées à partir d'un second matériau poreux, pour chaque couche de renfort, le procédé comportant les étapes consistant à :
- déposer une résine thermoformable sous forme de poudre sur le second matériau poreux,
- imprégner la résine thermoformable en profondeur dans le second matériau poreux par l'application d'un champ électrique alternatif traversant le second matériau poreux, et
- fixer par ramollissement la résine thermoformable dans le second matériau poreux.

Ce mode de réalisation permet de modifier la composition de la résine et/ou du matériau souple et poreux entre la couche centrale et les couches de renfort.

Selon un mode de réalisation, l'étape consistant à fixer par ramollissement la résine thermoformable dans le matériau souple et poreux comporte les étapes consistant à :
- appliquer une pression à chaud sur le matériau souple et poreux, et
- relâcher la pression de sorte que le matériau souple et poreux regonfle.

Ce mode de réalisation permet d'étaler la résine dans le matériau souple et poreux et de fixer les différentes couches entre elles, en profitant le cas échéant de la capacité du matériau souple et poreux à reprendre en partie son épaisseur d'origine lorsqu'il n'est plus contraint, tout en étant chaud.

Ce regonflement peut intervenir immédiatement après la sortie de l'installation qui applique la pression sur le matériau poreux, de manière à fabriquer des pièces de produit semi-fini dont l'épaisseur est relativement importante, et qui seront thermoformées ultérieurement. Il est également possible que le regonflement soit obtenu au moment du thermoformage, en profitant de la chaleur disponible dans les installations de thermoformage, auquel cas les pièces de produit semi-fini sont de moindre épaisseur, et l'installation de fabrication simplifiée.

Selon un mode de réalisation, l'étape consistant à déposer la résine est effectuée par saupoudrage sur une face du matériau souple et poreux.

Selon un mode de réalisation, les étapes consistant à déposer et imprégner la résine sont effectuées de manière localisée. Ce mode de réalisation permet également de déposer et d'imprégner la résine thermoformable de manière localisée dans le matériau souple et poreux de sorte à créer des surfaces de chute dans lesquelles le matériau souple et poreux n'est pas imprégné de résine ou en quantité insuffisante. Ces surfaces de chute peuvent ultérieurement être découpées pour une utilisation spécifique, par exemple pour aménager un toit ouvrant. Ces surfaces de chute sont plus facilement recyclables que les chutes existantes par dissociation des couches non imprégnés exemptes de fibres de verre. En outre, ce mode de réalisation permet d'économiser la résine.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 3 représentent :
- Figure 1 : une représentation schématique selon une vue de coupe d'un panneau ne faisant pas partie de l'invention pour un habitacle d'un véhicule automobile
- Figure 2 : une représentation schématique d'un procédé de réalisation du panneau de la Figure 1 selon un premier mode de réalisation de l'invention ; et
- Figure 3 : une représentation schématique d'un procédé de réalisation du panneau de la Figure 1 selon un second mode de réalisation de l'invention.

### DESCRIPTION DETAILLEE DE L'INVENTION

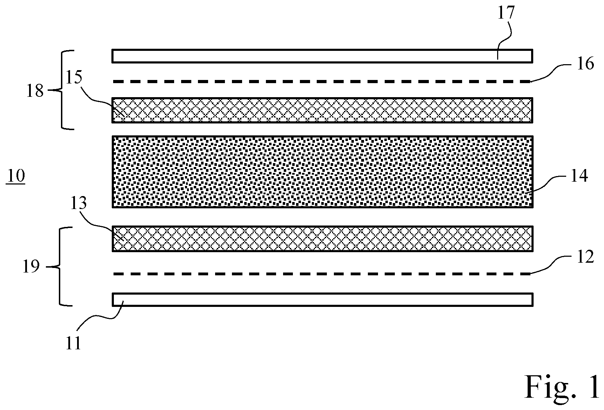

La Figure 1 illustre un panneau 10, ne faisant pas partie de l'invention, pour un habitacle d'un véhicule automobile comportant une pluralité de couches **11-17.** Une couche centrale **14** est encadrée par des couches supérieures **18** et des couches inférieures **19.** La couche centrale **14** est directement entourée de deux couches de renfort **13, 15.** La couche centrale **14** est réalisée par imprégnation **46** d'une résine thermoformable **21** en profondeur dans un matériau souple et poreux **20** puis par rigidification de la résine thermoformable **21.** Par exemple, le matériau souple et poreux **20** est une mousse en polyéther constituée au moins partiellement de cellules ouvertes dont la densité est supérieure à 5*Kg*/*m*³*.* Dans la suite de la description, pour cet exemple de réalisation, le terme « mousse » sera utilisé pour désigner le matériau souple et poreux **20.**

L'imprégnation **46** de la résine thermoformable **21** est effectuée par l'application d'un champ électrique alternatif à travers la mousse **20.** Chaque couche de renfort **13, 15** est reliée à une couche externe **11, 17** par une couche thermocollante **12, 16.** A titre d'exemple, la couche thermocollante peut être un film, un film ajouré, une couche de poudre ou un fil thermofusible. De préférence, la couche thermocollante associée à la couche d'aspect doit présenter une perméabilité à l'air lorsque l'on souhaite que la mousse présente des propriétés acoustiques. La couche de renfort inférieure **13** est reliée à une couche d'aspect **11** par une couche thermocollante **12** et la couche de renfort supérieure **15** est reliée à une couche de protection **17** par une couche thermocollante **16.** Les couches de renfort **13, 15** sont réalisées à partir d'un matériau souple ou semi-rigide. De préférence, les couches de renfort **13, 15** sont réalisées à partir d'un second matériau poreux **23, 63.** Par exemple, le second matériau poreux **23, 63** est une étoffe non tissée à base de fibres synthétiques notamment en polyester dont la masse surfacique est supérieure à 10g/m². Dans la suite de la description, pour cet exemple de réalisation, le terme « non tissé » sera utilisé pour désigner le second matériau poreux **23, 63.**

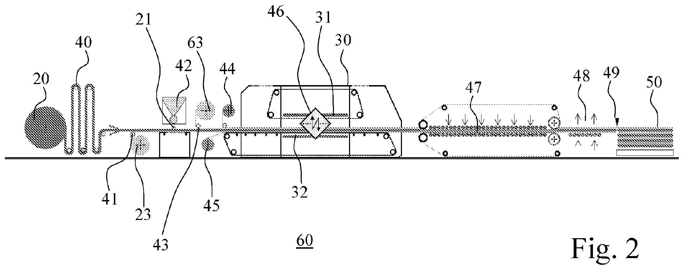

La Figure 2 illustre un exemple de réalisation du panneau 10 ne faisant pas partie de l'invention. Une mousse **20** est enroulée au début de la chaîne de fabrication **60.** Cette mousse **20** est déroulée au cours de la fabrication pour former le panneau **10.** La première étape **40** consiste à accumuler la mousse **20** pour effectuer un changement de rouleau sans stopper la chaîne de fabrication **60.** La face inférieure de la mousse **20** est ensuite recouverte **41** d'un non tissé **23** apte à former la couche de renfort **13.** L'étape suivante consiste à déposer **42** une résine thermoformable **21** sous forme de poudre sur la face supérieure de la mousse **20** apte à former la couche centrale **14.** Par exemple, la résine thermoformable **21** est une poudre époxy dont la granulométrie s'étend sur une plage comprise entre 0 et 100µm. La quantité de résine thermoformable **21** déposée est mesurée avec précision, par exemple la quantité peut être comprise entre 20 et 500g/m².

Suite à cette étape **42** de dépose de la résine thermoformable **21,** un non tissé **63** apte à former la couche de renfort supérieure **15** est ajouté **43** sur la face supérieure de la mousse **20.** Une couche thermocollante **16** et une couche de protection **17** sont ensuite ajoutées **44** sur le non tissé **63.** Une couche thermocollante **12** et une couche d'aspect **11** sont également ajoutées **45** sur le non tissé **23.** Le produit ainsi obtenu est introduit dans une chambre d'imprégnation **30** comportant des électrodes supérieure **31** et inférieure **32** permettant de créer un champ électrique alternatif à travers la mousse **20** et les non tissés **23, 63** de sorte à déplacer la résine thermoformable **21** aux coeurs de la mousse **20** et des non tissés **23, 63.** De préférence, l'amplitude du champ électrique alternatif est comprise entre 500 et 5000 volts/mm, préférentiellement entre 1000 et 3000 volts/mm, à une fréquence de l'ordre de 50Hz. La chambre d'imprégnation **30** permet ainsi de répartir uniformément la résine thermoformable **21** à l'intérieur de la mousse **20** et des non tissés **23, 63.** Lors de l'imprégnation **46,** la présence de couches thermocollantes **12, 16** étanches à la résine thermoformable **21** permet de contenir la résine thermoformable **21** dans la mousse **20** et les non tissés **23, 63.**

A la sortie de la chambre **30,** le produit obtenu comporte tous les éléments constitutifs des couches finales **11-17** et une imprégnation **46** efficace de la résine thermoformable **21** dans la mousse **20** et les non tissés **23, 63.** Le produit obtenu est pressé **47** à chaud par calandrage entre deux séries de cylindres de sorte à étaler la résine thermoformable **21** au coeur des fibres et à fixer la résine thermoformable **21.** La pression est ensuite relâchée **48** à chaud de sorte que la mousse **20** et puisse retrouver du volume. Pour finir, le produit semi-fini est découpé **49** aux dimensions voulues puis empilé **50.** Pour terminer la réalisation du panneau **10,** le produit semi-fini est thermoformé dans un moule de thermoformage (non représenté) de sorte à obtenir la couche centrale **14** et les couches de renfort **13, 15.** La chaîne de fabrication **60** illustrée sur la Figure 2 permet de produire quelque dizaines de mètres de produits semi-finis par minute sur une largeur de plusieurs mètres. L'opération de rigidification peut être effectuée après le stockage et/ou le transport du semi-fini ce qui permet de faciliter le processus de fabrication du panneau **10.** En variante, l'opération de rigidification peut être effectuée sur la même chaîne de fabrication **60** en supprimant les étapes et découpe **49** et de stockage **50.** Le stockage **50** peut également être réalisé par enroulement du semi-fini, l'étape de découpe **49** est alors supprimée.

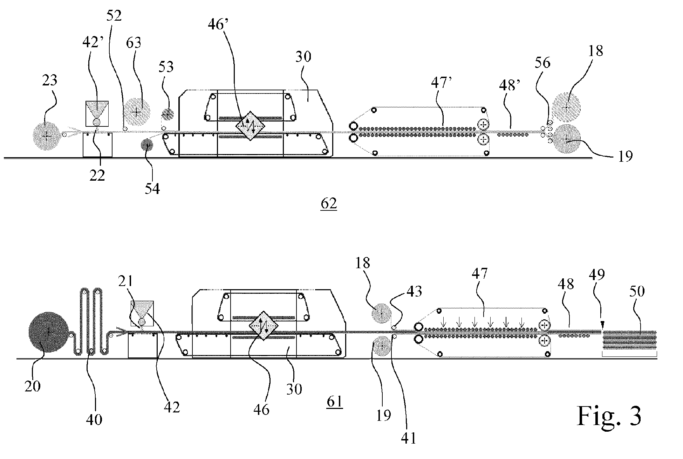

La Figure 3 illustre un second exemple de réalisation du panneau **10.** De la même manière que pour la chaîne de fabrication **60** de la Figure 2, une mousse **20** est enroulée au début d'une chaîne de fabrication **61.** La première étape **40** consiste à accumuler la mousse **20** pour effectuer un changement de rouleau sans stopper la chaîne de fabrication **61.** L'étape suivante consiste à déposer **42** une résine thermoformable **21** sous forme de poudre sur la face supérieure de la mousse **20.** Le produit ainsi obtenu est introduit dans une chambre d'imprégnation **30** permettant de créer un champ électrique alternatif à travers la mousse **20** de sorte à déplacer la résine thermoformable **21** au coeur de la mousse **20.**

A la sortie de la chambre **30,** la face inférieure de la mousse **20** est reliée **41** avec les couches inférieures **19** et la face supérieure est reliée **43** avec les couches supérieures **18.** Le produit ainsi obtenu comporte tous les éléments constitutifs des couches finales **11-17** et une imprégnation **46** efficace de la résine thermoformable **21** dans la mousse **20.** Le produit obtenu est pressé **47** à chaud par calandrage entre deux séries de cylindres de sorte à étaler la résine thermoformable **21** au coeur des fibres et à fixer la résine thermoformable **21** qui tapisse l'intérieur des cellules de la mousse **20.** La pression est ensuite relâchée **48** à chaud de sorte que la mousse **20** et les non tissés **23,63** puissent retrouver du volume. Pour finir, le produit semi-fini est découpé **49** aux dimensions voulues puis empilé **50.** Pour terminer la réalisation du panneau **10,** le produit semi-fini est thermoformé dans un moule de thermoformage (non représenté).

Contrairement au mode de réalisation de la Figure 2, les éléments constitutifs des couches de renfort **13, 15** sont associés aux couches thermocollantes **12, 16** et aux couches externes **11, 17** dans un chaîne de fabrication **62** spécifique. Cette chaîne de fabrication **62** comporte un non tissé **23** enroulé au début de la chaîne de fabrication. La première étape **42'** consiste à déposer une résine thermoformable **22** sous forme de poudre sur la face supérieure du non tissé **23.** La quantité de résine thermoformable **22** déposée est mesurée avec précision, par exemple la quantité peut être comprise entre 20 et 500g/m². Suite à cette étape **42'** de dépose de la résine thermoformable **22,** un autre non tissé **63** est ajouté **52** sur la face supérieure du non tissé **23.** Une couche thermocollante **12** et une couche d'aspect **11** sont ensuite ajoutés **54** sur la face inférieure du non tissé **23.** Une couche thermocollante **16** et une couche de protection **17** sont également ajoutés **53** sur le non tissé **63.** Le produit ainsi obtenu est introduit dans une chambre d'imprégnation **30** permettant de créer un champ électrique alternatif à travers les non tissés **23, 63** de sorte à déplacer la résine thermoformable **22** aux coeurs des non tissés **23, 63.** Le produit ainsi obtenu est pressé **47'** à chaud par calandrage entre deux séries de cylindres de sorte à étaler la résine thermoformable **22** au coeur des fibres et à fixer la résine thermoformable **22.** La pression est ensuite relâchée **48'** à chaud de sorte que les non tissés **23, 63** puissent retrouver du volume.

Les deux non tissés **23, 63** sont ensuite séparés **56** pour obtenir les éléments constitutifs des deux couches supérieure **18** et inférieure **19.** Ces éléments sont alors utilisés comme produits intermédiaires pour les étapes **41** et **43** de la chaîne de fabrication **61.** Pour finir, l'étape ultérieure (non représentée) de rigidification de la résine thermoformable **21** du produit semi-fini permet également de rigidifier la résine thermoformable **22** des couches de renfort **13, 15.**

Dans cet exemple, les deux couches de renfort **13, 15** associées aux couches thermocollantes **12, 16** et aux couches externes **11, 17** sont réalisées sur la même chaîne de fabrication **62** par une association des non tissés **23, 63.** En variante, les deux couches de renfort **13, 15** associées aux couches thermocollantes **12, 16** et aux couches externes **11, 17** peuvent être réalisées sur des chaînes de fabrication indépendantes. En variante, le nombre de couches **11-17** ou la position des couches externes **11, 17** du panneau **10** peut être changés sans modifier l'invention.

L'invention permet ainsi d'obtenir un panneau **10** pour un habitacle d'un véhicule automobile à la fois léger, thermoformable, absorbant les ondes acoustiques, conforme aux obligations de sécurité et compact. Le matériau souple et poreux qui constitue l'âme du panneau peut très avantageusement être une mousse constituée au moins partiellement de cellules ouvertes.

## Revendications

1. Procédé de fabrication d'un panneau (10) de garniture d'un habitacle pour l'habillage et/ou l'insonorisation d'une paroi d'un véhicule, **caractérisé en ce qu'**il comporte les étapes suivantes réalisées successivement :
- déposer (42) une résine thermoformable (21) sous forme de poudre sur un matériau souple et poreux (20),
- imprégner (46) la résine thermoformable (21) en profondeur dans le matériau souple et poreux (20) par l'application d'un champ électrique alternatif traversant le matériau souple et poreux (20),
- assembler (41) une couche de renfort inférieure (13) réalisée à partir d'un matériau souple ou semi rigide sur une face inférieure du matériau souple et poreux (20),
- assembler (43) une couche de renfort supérieure (15) réalisée à partir d'un matériau souple ou semi rigide sur une face supérieure du matériau souple et poreux (20), et
- fixer (47) par ramollissement la résine thermoformable (21) dans le matériau souple et poreux (20) ;
les couches de renfort (13, 15) étant préalablement réalisées à partir d'un second matériau poreux (23, 63) au moyen des étapes suivantes réalisées successivement pour chaque couche de renfort (13, 15) :
- déposer (42') une résine thermoformable (22) sous forme de poudre sur le second matériau poreux (23, 63),
- imprégner (46') la résine thermoformable (22) en profondeur dans le second matériau poreux (23, 63) par l'application d'un champ électrique alternatif traversant le second matériau poreux (23, 63), et
- fixer (47') par ramollissement la résine thermoformable (22) dans le second matériau poreux (23, 63).

2. Procédé selon la revendication 1, **caractérisé en ce que** l'étape consistant à fixer (47, 47') par ramollissement la résine thermoformable (21, 22) dans le matériau souple et poreux (20, 23, 63) comporte les étapes consistant à :
- appliquer (47, 47') une pression à chaud sur le matériau souple et poreux (20, 23, 63), et
- relâcher (48, 48') la pression de sorte que le matériau souple et poreux (20, 23, 63) regonfle.

3. Procédé selon l'une des revendications 1 à 2, **caractérisé en ce que** l'étape consistant à déposer (42, 42') la résine (21, 22) est effectuée par saupoudrage sur une face du matériau souple et poreux (20, 23, 63).

4. Procédé selon l'une des revendications 1 à 3, **caractérisé en ce que** les étapes consistant à déposer (42, 42') et imprégner (46, 46') la résine (21, 22) sont effectuées de manière localisée.

## Patentansprüche

1. Verfahren zur Herstellung eines Paneels (10) zur Verkleidung des Fahrzeugraums zum Abdecken und/ oder zur Schalldämmung einer Wand eines Fahrzeugs, **dadurch gekennzeichnet, dass** sie die folgenden Schritte umfasst, die nacheinander ausgeführt werden:
- Abscheiden (42) eines heißformbaren Harzes (21) in Form eines Pulvers auf einem flexiblen und porösen Material (20),
- Tiefenimprägnierung (46) des heißformbaren Harzes (21) im flexiblen und porösen Material (20) durch Anlegen eines Wechselstromfeldes, das durch das flexible und poröse Material (20) hindurchgeht,
- Verbinden (41) einer unteren Verstärkungsschicht (13), ausgeführt ausgehend von einem flexiblen oder halbstarren Material auf einer Unterseite des flexiblen und porösen Materials (20),
- Verbinden (43) einer oberen Verstärkungsschicht (15), ausgeführt ausgehend von einem flexiblen oder halbstarren Material auf einer Unterseite des flexiblen und porösen Materials (20), und
- Befestigen (47) des heißformbaren Harzes (22) durch Erweichen im flexiblen und porösen Material (20);
die Verstärkungsschichten (13, 15) werden dabei im Voraus angefertigt auf Basis eines zweiten porösen Materials (23, 63) mittels der beiden folgenden Schritte, die nacheinander für jede Verstärkungsschicht (13, 15) ausgeführt werden:
- Abscheiden (42') eines heißformbaren Harzes (22) in Form eines Pulvers auf einem zweiten porösen Material (23, 63),
- Tiefenimprägnierung (46') des heißformbaren Harzes (22) im zweiten porösen Material (23, 63) durch Anlegen eines Wechselstromfeldes, das durch das zweite poröse Material (23, 63) hindurchgeht, und
- Befestigen (47') des heißformbaren Harzes (22) durch Erweichen im zweiten porösen Material (23, 63).

2. Verfahren nach Anspruch 1, **dadurch gekennzeichnet, dass** der Schritte, der in einer Befestigung (47, 47') des heißformbaren Harzes (21, 22) durch Erweichen im flexiblen und porösen Material (20, 23, 63) besteht, die Schritte umfasst, die darin bestehen:
- Anwendung (47, 47') eines Drucks unter Wärmeeinwirkung auf das flexible und poröse Material (20, 23, 63), und
- Lösen (48, 48') des Drucks unter Wärmeeinwirkung so dass sich das flexible und poröse Material (20, 23, 63) wieder ausdehnt.

3. Verfahren nach einem der Ansprüche 1 bis 2, **dadurch gekennzeichnet, dass** der Schritt des Abscheidens (42, 42') des Harzes (21, 22) in einem Überstäuben auf einer Seite des flexiblen und porösen Materials (20, 23, 63) besteht.

4. Verfahren nach einem der Ansprüche 1 bis 3, **dadurch gekennzeichnet, dass** die Schritte des Abscheidens (42, 42') und des Imprägnierens (46, 46') des Harzes (21, 22) lokal begrenzt erfolgen.

## Claims

1. A method for manufacturing a panel (10) for covering an interior of a vehicle for dressing and/or soundproofing a wall of a vehicle, **characterized in that** it comprises the following steps successively performed:
- depositing (42) a thermoformable resin (21) in powder form onto a flexible and porous material (20),
- impregnating (46) the thermoformable resin (21) deeply into the flexible and porous material (20) by applying an alternating electric field through the flexible and porous material (20),
- assembling (41) a lower reinforcement layer (13) made from a flexible or semi-rigid material onto a lower face of the flexible and porous material (20),
- assembling (43) an upper reinforcement layer (15) made from a flexible or semi-rigid material onto an upper face of the flexible and porous material (20), and
- fixing (47) by softening the thermoformable resin (21) in the flexible and porous material (20);
the reinforcement layers (13, 15) being previously made from a second porous material (23, 63) by means of the following steps successively performed for each reinforcement layer (13, 15):
- depositing (42') a thermoformable resin (22) in powder form onto the second porous material (23, 63),
- impregnating (46') the thermoformable resin (22) deeply into the second porous material (23, 63) by applying an alternating electric field through the second porous material (23, 63), and
- fixing (47') by softening the thermoformable resin (22) in the second porous material (23, 63).

2. A method according to claim 1, **characterized in that** the step of fixing (47, 47') by softening the thermoformable resin (21, 22) in the flexible and porous material (20, 23, 63) comprises the steps of:
- applying (47, 47') a hot pressure on the flexible and porous material (20, 23, 63), and
- releasing (48, 48') the pressure so that the flexible and porous material (20, 23, 63) reinflates.

3. A method according to one of claims 1 to 2, **characterized in that** the step of depositing (42, 42') the resin (21, 22) is carried out by dispersing it onto a face of the flexible and porous material (20, 23, 63).

4. A method according to one of claims 1 to 3, **characterized in that** the steps of depositing (42, 42') and impregnating (46, 46') the resin (21, 22) are carried out in a localized manner.
